# FASCICULE DE BREVET EUROPEEN

(11) **EP 1 987 376 B1**
(45) Date de publication et mention de la délivrance du brevet: **01.05.2013**
(21) Numéro de dépôt: 07731024.1
(22) Date de dépôt: 22.02.2007
(51) Int. Cl.: G01V 9/00, E21B 41/00

(54) **PROCEDE ET SYSTEME D'IDENTIFICATION ET D'EVALUATION DE RISQUE DE DEFAILLANCE D'UN SYSTEME DE CONFINEMENT GEOLOGIQUE**
VERFAHREN UND SYSTEM ZUR IDENTIFIZIERUNG UND BEURTEILUNG DES FEHLERRISIKOS EINES GEOLOGISCHEN EINSCHLUSSSYSTEMS
METHOD AND SYSTEM FOR IDENTIFYING AND EVALUATING THE RISK OF FAILURE OF A GEOLOGICAL CONFINEMENT SYSTEM

(30) Priorité: 22.02.2006 FR 0601539
(43) Date de publication de la demande: 05.11.2008
(73) Titulaire: Oxand, 77210 Avon (FR)
(72) Inventeur: GERARD, Bruno, F-77690 Montigny sur Loing (FR); AUGE, Laurent, F-77300 Fontainebleau (FR); FRENETTE, Richard, Longueuil QC J4M 2L2 (CA); HOUDU, Emmanuel, F-77300 Fontainebleau (FR); BERNARD, Olivier, CH-1006 Lausanne (CH); LE GOUEVEC, Jérôme, F-75003 Paris (FR)
(74) Mandataire: Pontet, Bernard
(86) Numéro de dépôt international: PCT/FR2007/000317
(87) Numéro de publication internationale: WO 2007/096525

(56) Documents cités:
- GB-A- 2 300 736
- US-A1- 2003 225 606
- LEE ET AL: "Application of Bayesian network to the probabilistic risk assessment of nuclear waste disposal" RELIABILITY ENGINEERING AND SYSTEM SAFETY, ELSEVIER APPLIED SCIENCE, GB, [Online] vol. 91, no. 5, mai 2006 (2006-05), pages 515-532, XP005272331 ISSN: 0951-8320 Extrait de l'Internet: URL:www.elsevier.com/relate/ress>
- ZABALZA-MEZGHANI I ET AL: "Uncertainty management: From geological scenarios to production scheme optimization" JOURNAL OF PETROLEUM SCIENCE AND ENGINEERING, ELSEVIER, AMSTERDAM,, NL, vol. 44, no. 1-2, 31 octobre 2004 (2004-10-31), pages 11-25, XP004613306 ISSN: 0920-4105

## Description

La présente invention concerne un procédé et un système d'identification et d'évaluation de risque de défaillance d'un système de confinement géologique.

Ce procédé vise en particulier à sécuriser, par une identification et une évaluation de risque, tous types de systèmes de confinement géologique qu'ils soient naturels ou artificiels.

Le domaine de l'invention est celui des systèmes de confinement géologiques. Les systèmes de confinement géologique peuvent par exemple être des systèmes de confinement géologique tel que des réservoirs pétroliers, des aquifères potables ou salins, etc.

L'invention s'applique à l'identification des risques d'un système de confinement créé par l'homme, par exemple un système de stockage de CO2 dans un réservoir pétrolier : dans ce cas l'invention vise à déterminer les risques de défaillance du système de stockage et de proposer une sécurisation de ce système permettant, par exemple, d'éviter une défaillance qui aurait pour résultat une fuite du CO₂ stocké. L'invention s'applique aussi à l'évaluation des risques de défaillance d'un système de confinement naturel, tel qu'un aquifère potable : dans ce cas elle permet de déterminer les risques de contamination d'origine quelconque de l'aquifère.

Actuellement, il existe des moyens de sécurisation de certains types de systèmes de confinement géologiques tels que les formations souterraines servant de cavités de stockage. Ces derniers sont, en général, sécurisées à l'aide de dispositifs d'isolation comprenant, par exemple, au moins un bouchon, très souvent en coulis de ciment de composition quelconque ou encore à base d'argile avec de la bentonite. Ces moyens de sécurisation reposent sur un retour d'expérience de durabilité de quelques dizaines d'années et ne s'engagent pas sur des enjeux de long terme et d'impact sur l'environnement. De plus, ces moyens de sécurisation sont très souvent incomplets car ils ne prennent pas en compte assez de paramètres.

Par ailleurs, les moyens de sécurisation actuellement utilisés concernent des éléments de sécurisation qui sont pris seuls et ne tiennent compte ni des interactions entre ces éléments de sécurisation, ni des comportements de ces éléments sur le terrain.

Actuellement, il n'existe aucun moyen fiable et exhaustif permettant de connaître les risques représentés par des systèmes de confinement géologiques utilisées pour stocker une substance quelconque. Par ailleurs, il n'est pas non plus possible, avec les moyens utilisés actuellement, de connaître les dangers représentés par ces systèmes de confinement géologiques utilisés comme lieu de stockage en cas de défaillance. Enfin, les procédés de sécurisation actuels restent standards et généraux, et ne permettent pas de traiter les systèmes de confinement géologiques au cas par cas. Ceci constitue un inconvénient majeur vu la diversité des systèmes de confinement géologiques.

Dans la suite de cette demande de brevet, « biosphère » désigne l'ensemble des composants compris entre l'atmosphère et une profondeur souterraine d'environ 300m. Elle comprend donc notamment l'atmosphère, l'hydrosphère, le sol, les formations peu profondes, la faune et la flore présentes dans ces zones. « Géosphère » désigne l'ensemble de composants situés à une profondeur supérieure à 300m environ : elle englobe les données géologiques, hydrologiques, les données réservoirs, ainsi que les éléments introduits par l'homme : puits d'exploitation, puits d'exploration, puits d'injection etc.

Un objectif de la présente invention est de pallier aux inconvénients précités.

La présente invention vise à proposer un procédé et un système procurant une identification et une évaluation de risque de défaillance d'un système de confinement géologique, qui soit plus rapide et plus sûre à moindre coût, que les procédés et systèmes d'identification existants.

Un autre objectif de l'invention est de proposer un procédé d'identification et d'évaluation de risque de défaillance d'un système de confinement géologique, qui soit plus complet que les procédés actuels, en associant des études théoriques menées dans ce domaine à la réalité du terrain.

La présente invention a aussi pour objectif de proposer un procédé d'identification et d'évaluation de risque de défaillance d'un système de confinement géologique qui permette de traiter chaque système de confinement géologique spécifiquement, de façon à proposer des moyens de sécurisation adaptés à chaque système de confinement géologique.

Enfin la présente invention à pour objectif de prendre en compte une multitude de paramètres permettant de sécuriser un système de confinement géologique de façon plus exhaustive que les procédés actuels.

L'invention propose de remédier aux inconvénients précités par un procédé d'identification de risque de défaillance d'un système de confinement géologique, ledit procédé comprenant les étapes suivantes :
- acquisition de données relatives audit système;
- en fonction desdites données relatives audit système, décomposition dudit système en une pluralité de composants ;
- modélisation d'au moins un composant par au moins un volume, ladite modélisation étant réalisée par une discrétisation en volume dudit composant ;
- génération d'au moins un scénario de défaillance dudit système, ladite identification comprenant au moins une itération des étapes suivantes :
   - analyse d'un état d'au moins un volume modélisant au moins un composant dudit système;
   - détection, en fonction de l'état du volume, d'au moins un mode de défaillance potentiel dudit volume ;

Par une acquisition des informations relatives au système de confinement géologique, le procédé selon l'invention permet de tenir compte de la réalité du terrain. De plus, en effectuant une décomposition du système de confinement en composants, en modélisant ces composants par des volumes, et en analysant ces volumes un par un, le procédé selon l'invention permet avantageusement de proposer une identification exhaustive de risques de défaillance du système avec pour chaque risque au moins un scénario associé. Connaissant le scénario de défaillance associé à un risque, l'opérateur a la possibilité d'agir pour éviter ce scénario de défaillance et donc de minimiser ce risque de défaillance par une sécurisation adaptée.

En effectuant une modélisation du système de confinement sous forme de volume, le procédé selon l'invention permet de réaliser une identification de risque de défaillance de façon plus sûre, plus rapide et à moindre coût. Par ailleurs, cette décomposition permet d'effectuer une étude théorique et empirique du système de confinement souterrain en tenant compte de la réalité du terrain.

La décomposition, conformément au procédé selon l'invention, du système de confinement géologique en une pluralité de composants qui eux-mêmes sont modélisés par des volumes permet de traiter chaque système de confinement de manière spécifique. En effet, en décomposant un système de confinement en une pluralité de composants, puis en modélisant ces composants par des volumes on passe à un niveau d'étude plus élémentaire.

En travaillant non pas sur une vue globale mais sur une vue décomposée du système de confinement étudié, on arrive à effectuer des études qui sont d'une part spécifiques à chaque système car on étudie une composition spécifique, et d'autre part universelle car ce mode d'étude convient à tous systèmes de confinement. De plus, l'étude réalisée est alors très exhaustive car ce mode d'étude permet de traiter chaque volume représentant un composant du système pris seul ou en combinaison avec au moins un autre volume de façon à prendre en compte les interactions entre plusieurs volumes et plusieurs composants modélisés par ces volumes.

Avantageusement, le procédé selon l'invention permet de traiter tous systèmes de confinement équipés ou non d'une installation technique comprenant des éléments tels que des « casing » constitués d'une pluralité de tubes télescopiques. Par exemple, il permet d'effectuer une identification de risque de défaillance d'une formation souterraine utilisée pour effectuer un stockage d'un fluide, d'un gaz ou de toute autre substance.

Un exemple particulier d'application du procédé selon l'invention est l'identification de risque de défaillance d'une formation souterraine utilisée pour stocker du CO₂. Une telle formation peut être un réservoir pétrolier. En effet, le stockage du CO₂ dans des réservoirs pétroliers nécessite une installation technique permettant d'assurer l'étanchéité de la formation ou du réservoir, de façon à éviter les fuites de CO₂ pendant un laps de temps important. Il est alors essentiel de connaître les risques de défaillance du réservoir. Le procédé selon l'invention permet avantageusement d'identifier les risques de défaillance d'un réservoir pétrolier utilisé pour stocker du CO₂ pendant un laps de temps prédéterminé. De plus, il permet d'identifier les scénarios associés à un risque de défaillance, et permet d'identifier des solutions techniques permettant d'éviter ces scénarios.

« Discrétisation en volumes » d'un composant veut dire une modélisation par volumes discrets de ce composant. Sont pris en comptes dans cette discrétisation, le composant lui-même et la matière qui se trouve autour de ce composant, et notamment toutes les couches de la biosphère et de la géosphère. Cette discrétisation permet de modéliser le volume global formé par au moins un composant et son environnement par au moins une entité discrète, appelée volume. Dans cette modélisation par discrétisation en volumes, les caractéristiques des volumes représentent les caractéristiques du volume global modélisé. La finesse de la discrétisation assure la conservation de la continuité d'ensemble du volume global modélisé.

En effet, la discrétisation du système à adopter doit permettre d'analyser de manière fine et pertinente les interactions entre les composants, et les interactions d'un composant avec son environnement, puis, les modes de défaillance de ces derniers.

Par exemple, l'architecture d'un puits foré est souvent très dépendante de la géologie rencontrée : le changement de colonne de puits coïncide le plus souvent avec un changement important des propriétés de la couche géologique traversée, et la présence de gaines cimentées est le plus souvent dictée par le caractère sensible voire incompatible de la formation.

De plus, un « overburden », défini comme étant l'ensemble des formations se trouvant entre un réservoir et la surface, est classiquement divisé en couches géologiques pouvant posséder des propriétés très différentes : perméabilité, teneur en eau, etc.

Egalement, il peut être par exemple choisi de modéliser un volume global géologique composé d'un ensemble de failles par un ou plusieurs volumes discrets, chacun caractérisés notamment par une perméabilité verticale équivalente.

Le procédé selon l'invention permet d'effectuer une identification de risques de défaillance d'un système de confinement géologique. Un tel système est très complexe et l'identification des risques de défaillance d'un tel système fait intervenir une multitude de paramètres.

De plus, le procédé selon l'invention permet d'effectuer une identification de risque de défaillance d'un système de confinement sur le long terme et permet d'évaluer l'impact sur l'environnement d'une défaillance d'un tel système.

Le procédé selon l'invention comprend avantageusement une étape de proposition d'au moins une solution de sécurisation permettant d'éviter un scénario de défaillance. En effet, le procédé selon l'invention permet de proposer à un utilisateur les actions pertinentes qui sont à sa disposition pour éviter un scénario de défaillance d'un système de confinement géologique et de le fiabiliser. Les actions qui peuvent être proposées peuvent comprendre:
- une mise en oeuvre de solutions technologiques ciblées pour augmenter l'isolation de tel ou tel composant et/ou volume géologique ;
- une mise en oeuvre de moyens de monitoring pour contrôler l'absence de fuites significatives à des endroits critiques d'un système de confinement; et
- une réalisation de sondages/mesures supplémentaires pour diminuer les incertitudes sur les propriétés des composants et/ou volumes les plus critiques.

Une solution de sécurisation peut nécessiter une mise à jour de l'identification des risques de défaillance du système de confinement géologique. Par exemple, une mise en oeuvre d'une solution de maintien de l'intégrité fonctionnelle du système peut nécessiter une nouvelle discrétisation en volume du système et de toutes les étapes suivantes dans l'identification et l'évaluation des risques de défaillance du système. D'une manière similaire, une mise en oeuvre de solutions de monitoring sur au moins un volume critique du système peut nécessiter une nouvelle génération des scénarios de défaillance et une quantification de ces scénarios de défaillance.

Par ailleurs, avant l'étape de proposition d'au moins une solution de sécurisation, le procédé selon l'invention peut comprendre une étape d'identification d'au moins une source de risque de défaillance. En préalable à la définition de la solution de traitement des scénarios les plus critiques, il s'agit d'identifier le(s) macro-risque(s) à l'origine de ces scénarios : s'agit-t-il d'une incertitude sur une cinétique de dégradation ? d'une incertitude sur l'état initial du système ? sur la géométrie ? s'agit-il d'un composant particulier du système? d'un process particulier lié, par exemple, à la stratégie de confinement? d'une faiblesse du design du système de confinement. Des essais de vieillissement accéléré en laboratoire ou des études complémentaires peuvent être menées pour répondre à ces questions. Dans le cas particulier d'un réservoir de pétrole utilisé pour le confinement de CO₂, une campagne de caractérisation du champ pétrolier plus précise ou une reprise du réservoir, par exemple une modification ou une amélioration technique du design du réservoir, peut être envisagé.

Avantageusement, les données relatives au système de confinement, acquises pour l'implémentation du procédé selon l'invention, comprennent des données relatives à une installation technique équipant le système de confinement. Cette installation technique peut être une installation permettant d'assurer la fonction de confinement pour éviter d'une part une fuite d'une structure de stockage, et d'autre part une intrusion dans le système d'un élément extérieur indésirable. Cette installation peut être composée, par exemple, d'au moins un bouchon construit de matériau quelconque et notamment de ciment, d'au moins une gaine cimentée, d'au moins un fluide, d'au moins un « casing », de composants en aciers quelconques, etc.

Les données relatives à l'installation technique peuvent comprendre au moins une caractéristique d'au moins un composant de cette installation. Ces caractéristiques peuvent comprendre la composition du composant, un état du composant, une position du composant, une dimension du composant, un comportement du composant, etc.

Selon une version avantageuse du procédé selon l'invention, les données relatives au système de confinement comprennent des données relatives à la biosphère et/ou à la géosphère dans et/ou autour dudit système. En effet, pour un système de confinement, qui peut comprendre une pluralité de formations géologiques, il existe des risques de défaillances qui sont liés à la biosphère et la géosphère qui se trouvent autour et à proximité du système. C'est la raison pour laquelle une prise en compte de la géosphère et de la biosphère est nécessaire. A titre d'exemple, pour un réservoir pétrolier utilisé pour stocker du CO₂, il est important de considérer les couches de géosphère et de biosphère entourant le réservoir pour détecter un risque de fuite du CO₂ au travers de ces couches.

Selon une particularité avantageuse de l'invention, les données relatives au système de confinement comprennent des données relatives au contenu dudit système. De cette manière, il est possible d'effectuer une identification de risques de défaillances possibles ainsi qu'une identification des dangers liés au contenu du confinement. En effet, la nature et les caractéristiques du contenu du système de confinement peuvent engendrer des situations à risques sous certaines conditions : explosion sous haute pression, corrosion d'une installation technique, incompatibilité entre une installation technique et le contenu du système de confinement, etc. Il est important de pouvoir tenir compte de la nature et des caractéristiques du contenu dans l'identification de risque de défaillance du système de confinement.

De façon avantageuse, les données relatives au système de confinement comprennent une représentation en deux dimensions ou trois dimensions dudit système dans son environnement. Ceci permet de tenir compte des composants du système de confinement géologique et de construire une modélisation en volumes ayant des fonctionnalités et des interactions entre eux, de façon à obtenir une modélisation exhaustive et plus représentative du système de confinement géologique. La représentation en deux ou trois dimensions peut être une coupe symétrique d'au moins un composant et/ou volume du système de confinement géologique selon un angle fonctionnel.

Selon une particularité avantageuse de l'invention, les données relatives au système de confinement comprennent des données de surveillance dudit système. Ces données de surveillance peuvent être des données temps réel, acquises par des capteurs placés à proximité ou dans le système de confinement géologique.

Avantageusement, l'identification d'un scénario de défaillance prend en compte des données relatives à au moins une condition environnementale. Ces conditions environnementales peuvent être prises en compte par une acquisition de données relatives à ces conditions. Les conditions environnementales peuvent comprendre des conditions sismographiques, atmosphériques, climatiques, de pratiques humaines, d'utilisation des zones environnantes, etc.

Selon une version avantageuse de l'invention, au moins un volume modélise au moins un composant du système de confinement. Par exemple, un système de stockage dans un réservoir pétrolier peut être représenté par des volumes modélisant le cas échéant, un casing, un bouchon, un ciment annulaire, un réservoir, un fluide, etc.

D'une manière similaire, au moins un volume modélise au moins un composant faisant partie de la géosphère et/ou de la biosphère se trouvant dans ou à proximité du système de confinement. Par exemple, un composant de la géosphère ou de la biosphère, tel qu'une formation géologique ou biologique, un lac, une cavité, etc., peut être représenté par un volume.

Chaque volume représentant un composant appartenant au système de confinement géologique ou à une installation technique équipant le système ou bien à la géosphère et/ou la biosphère, peut comprendre au moins une caractéristique relative au composant qu'il modélise. Ces caractéristiques peuvent comprendre des données relatives à un état, un comportement, une évolution, une nature, etc. du composant modélisé. Ainsi, un volume peut en réalité devenir une macro entité comprenant une pluralité de données représentant une pluralité de caractéristiques d'un composant. Ces caractéristiques peuvent être exprimées par des fonctions ou équations.

Avantageusement, le procédé selon l'invention peut comprendre en outre une sélection dans une base d'au moins un volume prédéfini permettant de modéliser au moins un composant du système de confinement. En effet, l'invention peut comprendre une base de données « volumes » prédéfini permettant de représenter un composant du système de confinement géologique, un composant d'une installation technique équipant ce système, ou un composant de la biosphère et/ou de la géosphère dans ou autour du système. Ainsi, la modélisation du système de confinement peut être réalisée très rapidement. De plus, les volumes prédéfinis peuvent être complétés ou modifiés pour tenir compte d'une particularité d'un ou plusieurs composants.

Dans une version avantageuse du procédé selon l'invention, l'analyse de l'état d'un volume comprend une évaluation d'au moins une caractéristique physico-chimique du volume dans des conditions prédéterminées. L'analyse d'un composant, effectuée au travers d'au moins un volume représentant ce composant, peut comprendre des calculs théoriques sur un comportement du composant dans le temps, pris seul, ou en combinaison avec d'autres éléments. Ces calculs peuvent être réalisés pour une situation particulière d'utilisation du composant avec une pluralité de scénarios d'évolution dans le temps. Cette analyse a pour but d'identifier au moins un mode de défaillance du composant dans le temps, dans des situations d'utilisation particulière, suivant une pluralité de scénarios d'évolution.

Une telle analyse de l'état d'un volume par détermination d'au moins une caractéristique physico-chimique de ce volume à un temps t peut être appelée une analyse statique de l'état du volume. De plus, la modélisation d'au moins un volume en fonction de son état déterminé par analyse statique peut être appelée une modélisation statique de ce volume. Ainsi si tous les éléments du système de confinement sont modélisés de manière statique alors le système de confinement est modélisé de manière statique.

L'analyse de l'état d'un volume peut comprendre une prise en compte d'une cinétique d'évolution de ce volume dans le temps, éventuellement à partir de l'état du volume à un temps t antérieur. Dans certains cas, il n'est pas possible de définir un état a priori pour un volume ; il est plus facile de définir une cinétique de dégradation, comprenant par exemple une « règle » de dégradation en fonction de l'environnement et du flux de CO₂ ». En outre, les paramètres de cinétiques de dégradation peuvent ainsi aussi être à l'origine de la définition de scénarios : le scénario s est défini par le volume v étant dans un état x à telle date et évoluant selon la cinétique c à partir de cette date. Ainsi, le procédé selon l'invention peut comprendre une détermination d'un mode de défaillance d'un volume en fonction d'une cinétique d'évolution relative à ce volume et, au moins un scénario de défaillance peut être déterminé en fonction de ce mode de défaillance.

Une telle analyse d'un état du volume en fonction d'une cinétique d'évolution de ce volume peut être appelée une analyse dynamique du volume. Une modélisation d'au moins un volume utilisant une analyse dynamique de l'état du volume peut être appelée une modélisation dynamique de ce volume. D'une manière similaire, si tous les éléments du système de confinement sont modélisés de manière dynamique alors le système de confinement est modélisé de manière dynamique.

Bien entendu, un système de confinement peut être modélisé en utilisant soit une modélisation dynamique, soit une modélisation statique, soit une combinaison des deux. Par exemple, un volume du système de confinement peut être modélisé de manière dynamique et un autre de manière statique.

Selon une version avantageuse du procédé selon l'invention, un scénario de défaillance comprend une combinaison d'une pluralité de modes de défaillances d'une pluralité de volumes. En effet, dans l'exemple d'un réservoir pétrolier utilisé pour stocker du CO₂, une fuite du CO₂ peut être causée par une défaillance d'une pluralité de composants du réservoir, de l'installation technique visant à assurer l'étanchéité du réservoir, et des formations environnantes.

Par exemple, pour un scénario de fuite d'un contenu d'une cavité, le procédé selon l'invention permet de définir au moins un chemin de fuite, correspondant au trajet de fuite du contenu jusqu'à la surface.

D'une manière avantageuse, l'analyse de l'état d'un volume comprend une prise en compte d'un état d'au moins un autre volume parmi une pluralité de volumes. En effet, le comportement d'un composant modélisé par au moins un volume peut être calculé dans des conditions prédéfinies. Si ces conditions sont amenées à changer, ces changements doivent être pris en compte pour définir de la façon la plus précise le comportement d'un composant. Par exemple, dans le cas d'un stockage de CO₂ dans un réservoir pétrolier équipé d'un puits muni de deux bouchons d'abandon qui ont pour rôle l'étanchéité du réservoir, la pression subie par le bouchon d'abondon 2 ne sera pas la même si le bouchon d'abondon 1 est défaillant. Son comportement dans le temps se verra changé et il faudra en tenir compte. Il faut donc tenir compte de l'état du bouchon 1 pour modéliser le bouchon 2.

Le procédé selon l'invention, en prenant en compte l'interaction entre les composants d'un système de confinement géologique, permet d'effectuer une identification de risque de défaillance du système de façon plus précise et plus complète.

Le procédé selon l'invention peut en outre comprendre une étape de choix d'au moins un scénario de défaillance parmi une pluralité de scénario de défaillance. En effet, l'analyse de l'état d'un composant d'un système de confinement géologique peut aboutir à une pluralité de modes de défaillance de ce composant, ce qui aboutira à une pluralité de scénarios de défaillance du système. Dans ce cas, le procédé selon l'invention peut comprendre un choix selon des critères prédéfinis d'un scénario de défaillance parmi une pluralité de scénarios de défaillances.

Selon une particularité avantageuse de l'invention, au moins un volume est associé un facteur dit de fréquence, ledit facteur de fréquence étant évalué au moins en fonction d'une probabilité de défaillance dudit volume.

Pour chaque mode de défaillance et éventuellement pour chaque cause de défaillance de chacun des volumes, ces fréquences d'occurrence peuvent être obtenues de plusieurs manières :
- avis d'experts ;
- simulations quantitatives ;
- données statistiques et retour d'expérience

Selon une particularité avantageuse de l'invention, à au moins un scénario de défaillance est associé un facteur dit de fréquence, ledit facteur de fréquence étant évalué en fonction d'une probabilité d'occurrence dudit scénario.

Ces fréquences d'occurrence peuvent être évaluées en fonction des données relatives aux volumes concernés par ce scénario. Elles peuvent être obtenues de plusieurs manières :
- avis d'experts ;
- simulations quantitatives ;
- données statistiques et retour d'expérience ;
- calcul par combinaison des facteurs de fréquences des volumes impliqués

Avantageusement, à au moins un scénario de défaillance est associé un facteur dit de gravité, ledit facteur de gravité étant évalué en fonction des conséquences dudit scénario. En effet pour chaque scénario de défaillance, le procédé selon l'invention peut comprendre une estimation des dommages causés par une défaillance qui peut être calculée.

Les conséquences d'une défaillance du système de confinement peuvent être de deux ordres :
- une perte de performance de la fonction attendue de confinement, comme par exemple une perte d'une substance stockée par fuite excessive ou contamination par intrusion d'éléments extérieurs, diminuant voire annulant le bénéfice du stockage ;
- des dommages liés à l'effet néfaste ou à la dangerosité de la substance stockée.

Les dommages pris en compte peuvent être des dommages concernant le système de confinement géologique et une installation technique équipant ce système, et des dommages causés à l'environnement par une telle défaillance. Parmi ces dommages, on peut par exemple citer ceux causés par une fuite d'un contenu d'une cavité.

L'évaluation du facteur de gravité peut comprendre une prise en compte d'un débit de fuite d'un contenu dudit système de confinement et/ou d'un taux d'intrusion dans ledit système de confinement. Par exemple, dans le cas d'un réservoir pétrolier contenant du CO₂, on peut estimer les dommages causés par un scénario de défaillance qui consiste en une fuite du CO₂. L'estimation de la gravité d'une fuite de CO₂ peut notamment comprendre les dommages causés à l'environnement et à l'opérateur.

Avantageusement, au moins un facteur de gravité peut être associé à au moins un enjeu prédéterminé. En effet, le procédé selon l'invention peut comprendre une détermination des conséquences d'un scénario de défaillance par évaluation de l'impact des différents enjeux définis à l'échelle d'un projet de confinement géologique en cas de défaillance : enjeux pour l'opérateur, pour l'environnement. Il permet de mettre en relation la performance du système de confinement et le niveau d'impact des différents enjeux en utilisant des indicateurs de performance, par exemple des débits de fuite ou un taux d'intrusion. Un débit de fuite x de CO₂ cause des pertes d'exploitation de x jours pour l'opérateur et peut mettre en danger la vie d'autrui au sein d'un certain périmètre en surface. Le procédé s'applique lorsque :
- les conséquences sont quantifiées : un coût, et
- les conséquences ne sont pas quantifiées : une décision d'exclure le confinement de ce type d'une politique industrielle si on perd plus de x% de gaz stockés sur une période donnée.

Le procédé selon l'invention peut comprendre en outre une simulation permettant d'estimer quantitativement un scénario de défaillance, par exemple un débit de fuite.

Le procédé selon l'invention peut comprendre en outre une simulation permettant d'estimer quantitativement l'évolution de l'état d'un volume au cours du temps en fonction d'une cinétique d'évolution et d'un état de ce volume à un temps t. Par exemple, dans le cas d'un bouchon d'un puits utilisé pour le stockage de CO₂, le procédé selon l'invention peut comprendre une évaluation, par l'utilisation d'une loi de lixiviation par exemple, de l'évolution de la perméabilité du bouchon à partir d'un état à un temps t, par exemple bouchon fissuré, et une cinétique d'évolution donnée.

Le procédé selon l'invention peut en outre comprendre une évaluation d'une criticité d'un scénario de défaillance en fonction d'un facteur de fréquence et/ou d'un facteur de gravité. La criticité peut être estimée en fonction des dommages et de la fréquence d'occurrence des défaillances. Ainsi on peut envisager plusieurs niveaux de criticité. Ceci permet de distinguer les scénarios de défaillance qui sont plus critiques que d'autres et ainsi de traiter ces scénarios en priorité.

Avantageusement, le procédé selon l'invention peut comprendre une identification et/ou une hiérarchisation d'au moins un scénario de défaillance en fonction d'une criticité d'au moins un scénario défaillance. Cela peut permettre, dans l'exemple particulier du stockage du CO₂ dans un réservoir pétrolier, d'identifier un cheminement critique de CO₂ par exemple, et donc de préconiser un monitoring de CO₂ à un emplacement particulier, ou de recommander la mise en place d'un nouveau bouchon d'isolement à tel niveau.

Le procédé selon l'invention peut également comprendre une évaluation d'une criticité d'un mode de défaillance d'un volume, en fonction d'un facteur de fréquence et d'une contribution dudit volume à au moins un scénario le plus critique. Cette criticité peut être déterminée en redistribuant la criticité d'un scénario au niveau des volumes impliqués dans ce scénario et des défaillances correspondantes.

Avantageusement, le procédé selon l'invention peut comprendre une identification et/ou une hiérarchisation d'au moins un mode de défaillance d'au moins un volume en fonction d'une criticité d'au moins un mode de défaillance d'au moins un autre volume. On peut ainsi effectuer une cartographie des risques au niveau d'au moins un volume du système de confinement géologique, faisant ainsi ressortir un caractère sensible du volume au niveau du système global. Cela peut permettre, dans l'exemple particulier du stockage du CO₂ dans un réservoir pétrolier, de mettre en évidence les volumes critiques et donc par exemple de démontrer le besoin d'études plus spécifiques de dégradation de ce volume dans les conditions de son environnement direct.

Avantageusement, une fois que les scénarios de défaillances ont été identifiés et quantifiés selon un indice de criticité, le procédé selon l'invention peut comprendre un test de robustesse permettant la validation de l'exhaustivité des scénarios de criticité significative, c'est-à-dire enveloppe de la cartographie des risques des scénarios. Cette étape permet de s'assurer que l'on n'oublie pas de source possible de risque. Elle consiste à jauger l'influence d'un certains nombres d'incertitudes prises en compte par la définition d'hypothèses de travail. Cette étape précède l'étape d'identification de la source de risque. Dans le cas d'un système de confinement de CO₂, ce test est réalisé de la manière suivante :
- variation d'au moins un paramètre de modélisation qui n'a pas été à la base de la définition d'au moins un scénario de défaillance, les hypothèses de travail comprenant des conditions aux limites de pression de gaz, des propriétés physiques ;
- vérification des fuites obtenues : si les fuites varient peu avec ces paramètres, ou du moins restent enveloppées par une valeur majorante acceptable, alors le test de robustesse est satisfaisant, sinon rajout d'un scénario de défaillance supplémentaire.

Par ailleurs, le procédé selon l'invention peut comprendre, en outre, pour au moins un scénario, une évaluation d'une incertitude pour ce scénario. En effet, en fonction de la précision des informations, de leur importance, de leur quantité et de leur qualité, l'invention permet de définir une incertitude sur les scénarios de défaillance identifiés ainsi que sur les risques associés à ces scénarios.

Plusieurs solutions sont possibles pour évaluer l'incertitude d'un scénario :
- dans le cas où les phénomènes ou modes de défaillance sont paramétrables et modélisables, on peut réaliser un calcul quantitatif. Ce calcul peut être effectué de deux manières différentes :
- déterminer les probabilités de dépassement de critère (par exemple débit limite) au cours du temps, à partir de distributions sur les paramètres d'entrée (considérés comme des variables aléatoires) des différents composants et/ou volumes ;
- ou bien déterminer l'intervalle d'incertitude sur l'indicateur (débit par exemple) du scénario à partir des intervalles d'incertitude des différents modes de défaillance (traitement de la connaissance imparfaite des données du système) ;
- dans le cas contraire, l'évaluation de l'incertitude est réalisée par un raisonnement de type qualitatif.

Le procédé selon l'invention peut avantageusement comprendre une identification et/ou une hiérarchisation d'au moins un scénario de défaillance du système de confinement géologique projeté à une date future prédéterminée et plus particulièrement à des échéances temporelles diverses de court, moyen et long termes. Il permet notamment de faire ressortir les évolutions des risques induits par le système de confinement géologique depuis son établissement et sur le long terme. Dans l'exemple du stockage de CO₂ dans les réservoirs pétroliers, l'évaluation des risques peut ainsi porter sur les phases d'injection (court terme), de rééquilibrage des pressions (court-moyen terme), de stockage proprement dit (moyen et long termes).

Avantageusement le procédé selon l'invention peut être mis en oeuvre pour l'identification de risque de défaillance d'un réservoir pétrolier utilisé pour stocker du CO₂.

Le procédé selon l'invention peut avantageusement être mise en oeuvre dans toutes les phases d'un projet de confinement. Un tel projet de confinement pouvant comprendre l'étude préalable du système de confinement, la surveillance à long terme, en passant par la phase d'injection et la phase d'abandon. Dans le cas particulier des puits forés, l'étude préalable du système de confinement peut comprendre par exemple un design des installations technique de puits forés et la configuration géologique.

Le procédé selon l'invention peut être mis en oeuvre pour l'analyse des risques de défaillance d'un système de confinement destiné à être abandonné ou abandonné. Dans un exemple d'application particulier, le procédé selon l'invention peut être mis en ouvre pour l'analyse de l'abandon d'un champ pétrolier.

Le procédé selon l'invention peut aussi être mis en oeuvre pour l'analyse de risques de défaillance et d'évaluation des performances d'un système de confinement prévu pour un stockage saisonnier, par exemple de gaz naturel.

Suivant un autre aspect de l'invention, il est proposé un système d'identification de risque de défaillance d'un système de confinement géologique, ledit système comprenant :
- des moyens d'acquisition de données relatives audit système;
- des moyens de décomposition dudit système en une pluralité de composants en fonction desdites données relatives audit système ;
- des moyens de modélisation d'au moins un composant par au moins un volume, ladite modélisation étant réalisée par une discrétisation en volume dudit composant ;
- des moyens de génération d'au moins un scénario de défaillance dudit système, ladite génération comprenant au moins une itération des étapes suivantes :
   - analyse d'un état d'au moins un volume modélisant au moins un composant dudit système;
   - détection, en fonction de l'état du volume, d'au moins un mode de défaillance potentiel dudit volume ;

D'autres avantages et caractéristiques apparaîtront à l'examen de la description détaillée d'un mode de réalisation nullement limitatif, et des dessins annexés sur lesquels
- la figure 1 est une représentation schématique d'un puits de forage et de la matière environnante;
- la figure 2 est une représentation schématique d'un exemple de modélisation selon l'invention d'un composant d'un puits de forage par des volumes ;
- la figure 3 est une représentation d'une décomposition d'un puits en composants et une modélisation d'un composant par des volumes, conformément au procédé selon l'invention ;
- la figure 4 est une représentation d'un réseau de fuite par un puits d'un contenu d'un réservoir pétrolier ;
- la figure 5 est une représentation schématique de plusieurs chemins de fuite constituant une défaillance possible d'un puits étudié selon le procédé selon l'invention ;
- la figure 6 est un exemple de classification des scénarios de défaillance d'un puits conformément au procédé selon l'invention ;
- la figure 7 est un exemple de classification des défaillances des différents composants d'un système de confinement géologique conformément au procédé selon l'invention ;
- la figure 8 est un exemple d'un mode opératoire d'une identification et évaluation de risque de défaillance selon l'invention ;
- la figure 9 est un exemple d'illustration des éléments internes ou externes à un système « puits » et qui peuvent être pris en compte dans le processus d'analyse de risque et de sécurisation selon l'invention ; et
- les figures 10 et 11 sont deux exemples d'étude de composants impliqués dans deux chemins de fuite dans le système puits de la figure 9.

L'exemple particulier et nullement limitatif détaillé ci-dessous concerne une évaluation des risques de défaillance d'un puits (10) bouché, dans un environnement de stockage de CO₂, constituant une installation technique visant à garantir l'étanchéité du stockage. L'évaluation de risque prendra en compte un système biosphère-géosphère, sur une certaine période de référence T. La description de cet exemple peut se faire sous forme d'une pluralité d'étapes.

### Etape Préliminaire : Analyse fonctionnelle

Après une acquisition des données du puits (10) et de son environnement, le procédé selon l'invention comprend également en préalable une étape d'identification et d'analyse des différents composants du puits. Le puits est alors perçu comme un système « puits », comprenant des composants de base et qui ont des interactions entre eux et avec l'extérieur : séismes, pressions extérieures, etc. Cette étape permet, dans un premier temps, de faire ressortir les fonctions devant être remplies par chacun des composants au sein du système « puits ».

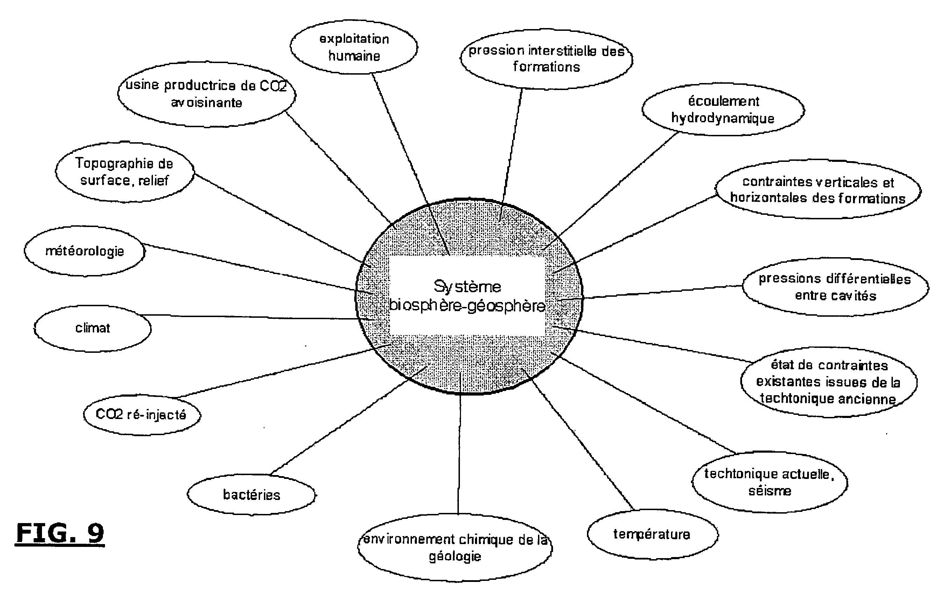

Le figure 9 permet d'illustrer les éléments internes ou externes au système et qui peuvent être pris en compte dans le processus d'analyse de risque et de sécurisation du puits de stockage.

Chacun des éléments est alors balayé un par un et pour chacun d'eux les contraintes susceptibles d'être exercées sur les composants du système sont prises en compte.

L'analyse de ces éléments permet de ressortir les données répertoriées dans un tableau. Le tableau 1 en est une illustration.

**Tableau 1**

| **Elément** | **Composant impacté** | | **Fonctions de contraintes du composant impacté** |
|---|---|---|---|
| **CO2 réinjecté** | puits | éléments cimentés | - Résister à la perméation dans les éléments cimentés (sous l'effet d'un gradient de pression) |
| | | | - Résister à la diffusion dans les éléments cimentés (sous l'effet d'un gradient de concentration) |
| | | | - Résister à la progression des bulles de CO₂ gazeux dans les éléments cimentés |
| | | casings | - Résister au déplacement des fluides de remplissage à travers les casings percés |
| | | | - Résister à la corrosion des casings sous l'effet de l'eau chargée en CO₂ etc... |
| | réservoir | | |
| | couverture de réservoir | | - Résister à la perméation dans la couverture de réservoir etc... |
| | failles | | - Résister à l'écoulement le long des failles des fluides chargé en CO₂ etc... |
| **Environnement chimique de la géologie** | puits | | ... |
| **Séisme** | puits | | ... |
| | overburden | | ... |
| | couverture de réservoir | | ... |
| **Température** | Puits | | ... |
| | Couverture de réservoir | | ... |
| **Etat de contraintes existantes des formations** | ... | | ... |
| **Surpression dans les formations** | ... | | ... |
| **Exploitation humaine** | couverture de réservoir | ... | |
| | failles | ... | |

### Etape 1 : DISCRÉTISATION EN VOLUMES

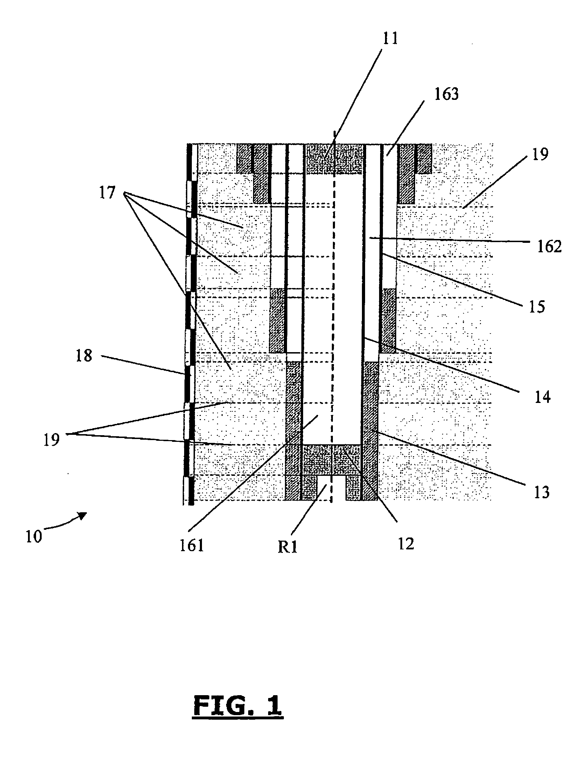

La figure 1 représente schématiquement le puits de stockage étudié. Ce dernier comprend un réservoir R1, des bouchons de ciments 11 et 12, des gaines de ciment 13, des « casings » 14 et 15, au moins un fluide 161, 162, 163 et des formations 17 faisant partie de la géosphère et de la biosphère environnante. La profondeur par rapport à la surface de l'emplacement de tous ces composants est donnée par un axe vertical 18.

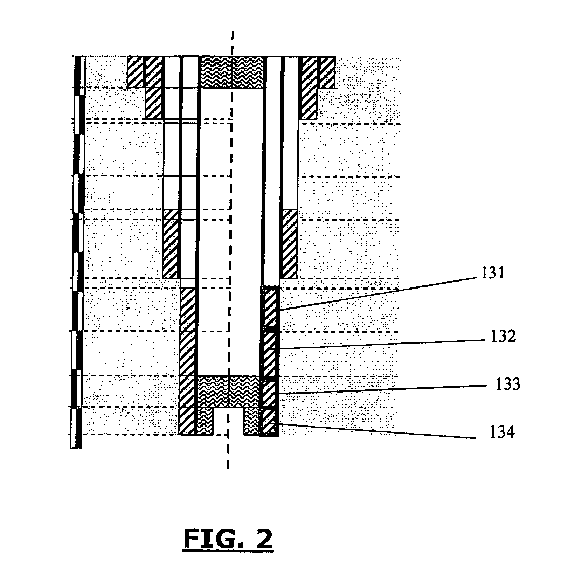

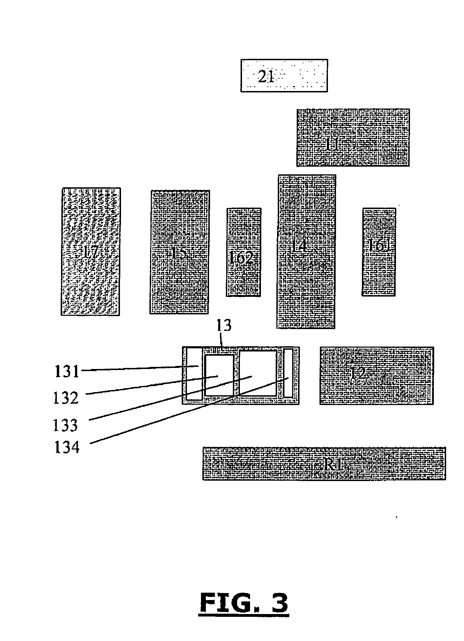

Le puits de la figure 1 a ensuite été discrétisé en volumes permettant de modéliser les composants du puits. La discrétisation a été effectuée en tenant compte des limites 19 entre les différentes formations. La figure 3 montre la discrétisation obtenue. La discrétisation a été effectuée, dans un premier temps, suivant les composants de base rencontrés, puis ceux-ci ont été divisés en autant de volumes que de couches horizontales géologiques traversées, tel que représenté sur la figure 2 pour le composant gaine de ciment 13. Ainsi le composant gaine de ciment 13 à été discrétisé en quatre volumes, à savoir les volumes 131, 132, 133, et 134 en fonction des formations 17 faisant partie de la géosphère environnante.

Sur la figure 3, on peut apercevoir des volumes qui modélisent un réservoir R1, le bouchon d'abandon 12, la gaine cimentée 13, des casings de productions 14 et 15, des fluides 161 et 162, des formations avoisinantes 17, le bouchon abondon 11 et la surface 21.

### Etape 2 : GÉNÉRATION DES SCÉNARiOS DE DÉFAILLANCE

### 2.1 : Construction de l'arbre d'événements

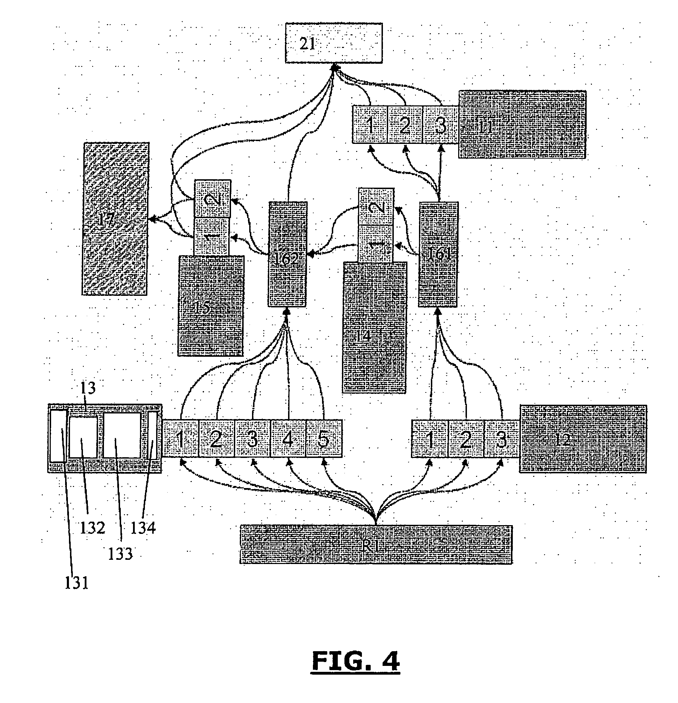

En fonction des résultats de l'étape 1, un réseau de fuite (ou arbre d'événements) du CO₂ est établi, en figure 4. Le réseau est composé d'une pluralité de chemins de fuite. Ces chemins de fuite sont établis en fonction des modes de défaillance des volumes du puits. En effet, tel qu'on peut observer sur la figure 4, pour chaque volume du puits il existe au moins un état discret listé de 1 à 5. Par exemple, pour la gaine cimentée 13, et chacun des volumes 134, 133, 132, 131, cinq états de dégradation sont listés.

### 2.2 : Analyse par volumes

Pour chacun des volumes discrétisés, on mène l'analyse en réalisant l'inventaire des modes de défaillances pouvant affecter le composant modélisé par le volume. Les défaillances peuvent s'assimiler à des dégradations dans le temps des propriétés du volume ou bien à des endommagements soudains du volume suite à des événements discrets, selon les cas.

Les défaillances sont inventoriées de manière exhaustive en étudiant :
- l'impact des agressions extérieures ;
- les interactions d'au moins un autre volume avec le volume étudié ;
- une cinétique d'évolution du volume ou d'un volume adjacent.

Les défaillances des volumes sont listées puis cotées en fonction d'un facteur de fréquence. Dans cet exemple, illustré par le tableau 2 et le cas de la gaine de ciment 13 et du volume 134, les modes de défaillance (lignes du tableau) sont caractérisés en affectant un indice de fréquence à chaque degré possible d'ampleur de la défaillance (colonnes du tableau). L'indice de fréquence est défini au tableau 3, en fonction d'une probabilité d'occurrence, qualitative ou quantitative. Cette approche permet d'intégrer les incertitudes sur les données du système ou les modèles utilisés, inéluctables quand il s'agit d'évaluer le devenir d'un composant sur le long terme (100 à 10 000 ans).

**Tableau 2**

| **Volume (par exemple, 131 ou 132 ou 133 ou 134)** | **Mode de défaillance (MdD)** | **Causes** | **Degré d'ampleur de la défaillance** | | | | | |
|---|---|---|---|---|---|---|---|---|
| | | | **K0*** | **α K0** | **etc...** | | | |
| Volume 134 | Lixiviation | par l'eau des formations | | **2** | **1** | **1** | **1** | **1** |
| | | décalcification par H2S | | **1** | **1** | **1** | **1** | **1** |
| | Carbonatation | par le CO2 | | **1** | **1** | **1** | **1** | **1** |
| | Fissuration | contraintes des formations | | **1** | **1** | **1** | **1** | **1** |
| | etc... | | | **1** | **1** | **1** | **1** | **1** |
| | | | | **1** | **1** | **1** | **1** | **1** |
| | | | | **5** | **2** | **1** | **1** | **1** |
| Etat global incluant l'ensemble des MdD | | | **U%** | **V%** | **W%** | **X%** | **Y%** | **Z%** |
| Indice de fréquence global pour le volume | | | **3** | **5** | **2** | **1** | **1** | **1** |

| | | | | | | | | |
|---|---|---|---|---|---|---|---|---|
| ***K0** représente le paramètre de perméabilité du composant dans son **état sain de référence** | | | | | | | | |

Le tableau 2 présente l'ensemble des modes de défaillance et leur notation sur la base d'un indice de fréquence, pour le volume 134.

Les degrés possibles d'ampleur des défaillances (colonnes du tableau) sont classés ici sur la base de la perméabilité résultante du volume.

Chaque mode de défaillance est noté selon la structure du tableau en fonction des données relatives aux volumes concernés et dans des conditions prédéterminées.

**Tableau 3**

| Description | Classe, niveau | Probabilité associée |
|---|---|---|
| Impossible ou admis comme tel | 1 | P1 |
| Très peu probable | 2 | P2 |
| Peu probable | 3 | P3 |
| Probable | 4 | P4 |
| Très probable | 5 | P5 |
| Certain | 6 | P6 |

Enfin, on intègre l'ensemble des modes et causes de défaillance du volume, leurs différents indices de fréquence, de manière à établir la distribution probabilisée d'états possibles pour le volume. Les résultats sont illustrés pour le cas de la gaine cimentée 13 et du volume 134, par les deux dernières lignes du tableau 2. Les règles classiques de calcul de probabilités sont utilisées. Une fois la probabilité calculée (avant-dernière ligne du tableau 2), on effectue la notation de fréquence par rapport à la grille donnée au tableau 3 (dernière ligne du tableau 2).

Voici qualitativement un exemple de raisonnement associé à la détermination des probabilités des différents états possibles du volume (deux dernières lignes du tableau 2):
- on part de la colonne de droite (état le plus néfaste) et on écrit que la probabilité pour le volume d'être dans cet état est égale à la somme des probabilités d'être dans cet état *selon chacune des causes* (causes admises indépendantes entre elles). S'il n'y a qu'une seule cause, la probabilité correspondante est reportée directement.
- on continue ce raisonnement pour les autres états du volume par ordre de caractère néfaste décroissant (colonnes de droite à gauche), en gardant à l'esprit que la somme des probabilités des différents états possibles du volume est bien sûr égale à un (les différents états possibles sont disjoints : si un état est *probable,* les autres sont nécessairement globalement *peu probables*).

### 2.3 : Génération des scénarios de défaillance

Les scénarios de défaillance, définis ici comme une combinaison d'états des volumes rencontrés sur un chemin de fuite donné, sont construits par analyse des interactions de flux entre volumes et des dégradations couplées.

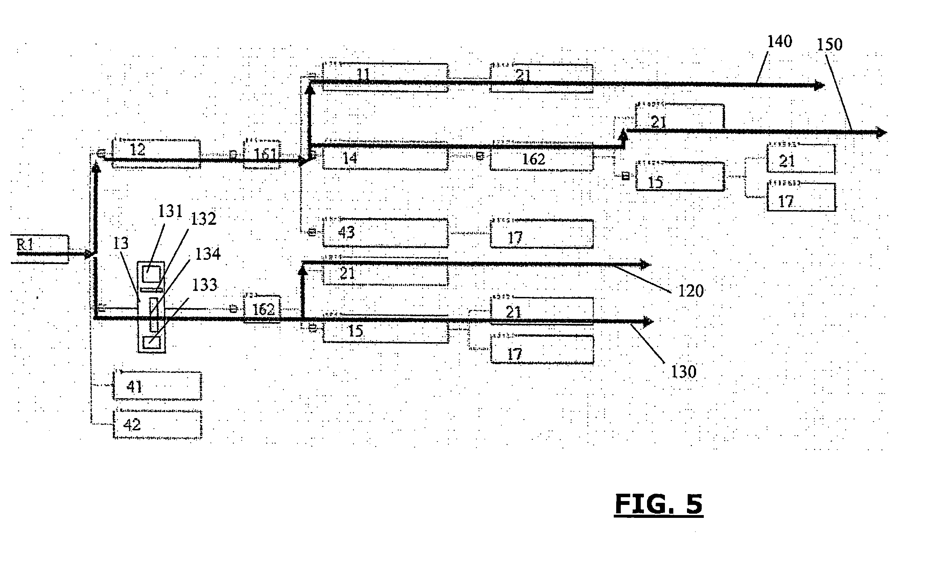

Dans notre exemple du puits de stockage, plusieurs chemins de fuite et plusieurs scénarios de fuite peuvent être identifiés. Toujours en considérant une défaillance de la gaine cimentée 13 et plus précisément du volume 134, deux chemins de fuite 120 et 130 sont identifiés et représentés en figure 5.

Sur la figure 5 on peut apercevoir une présentation différente des chemins de fuite. Sur cette représentation sont représentés les différents volumes du puits et une pluralité de chemins de fuite possible du CO₂. On peut trouver par exemple, une colonne de puits rompue 43, une couverture de réservoir 41, des failles 42, un casing de colonne intérieur percé 15. On retrouve aussi les éléments du puits listés plus haut.

Pour le chemin de fuite 120, la fuite du CO₂ s'opère de la manière suivante : depuis le réservoir de CO₂ R1, le CO₂ passe par la gaine cimentée 13 et les différents volumes 134,133, 132 et 131, puis par le fluide 162, pour arriver à la surface 21.

Considérons maintenant le chemin 130 représenté en figure 5. La fuite du CO₂ s'opère du réservoir vers la surface au travers d'abord de la gaine cimentée 13 et des différents volumes 134, 133, 132 et 131, puis du fluide 161, puis du casing 15, puis du fluide 163, pour arriver à la surface 21.

### Etape 3 : QUANTIFICATION DES SCÉNARIOS

L'analyse des scénarios de défaillance en termes de risque s'effectue par considération d'un facteur de fréquence et d'un facteur de gravité du scénario.

Le facteur de fréquence est quantifié par le calcul d'une fréquence pour le scénario considéré, réalisé à partir des fréquences des différents états des volumes impliqués, établies à l'étape 2. Cette fréquence ou probabilité est alors représentée de manière qualitative par un indice de fréquence, déjà défini précédemment (voir tableau 3).

Le facteur de gravité est ici basé sur la valeur des débits en surface de fuite de CO₂ issus du puits. L'indice de gravité associé est présenté au tableau 4.

**Tableau 4**

| **Grille de gravité adoptée** | |
|---|---|
| **Niveau** | **Débit surfacique issu du puits** |
| 1 : Mineur | Moins de a [t/an] |
| 2 : Faible | a à b [t/an] |
| 3 : Sérieux | b à c [t/an] |
| 4 : Majeur | c à d [t/an] |
| 5 : Critique | d à e [t/an] |
| 6 : Catastrophe | Plus de e [t/an] |

La note de gravité du scénario est affectée après calcul du débit de fuite de CO₂ à travers le puits, selon le scénario considéré, c'est-à-dire selon les défaillances des volumes intervenant dans ce scénario.

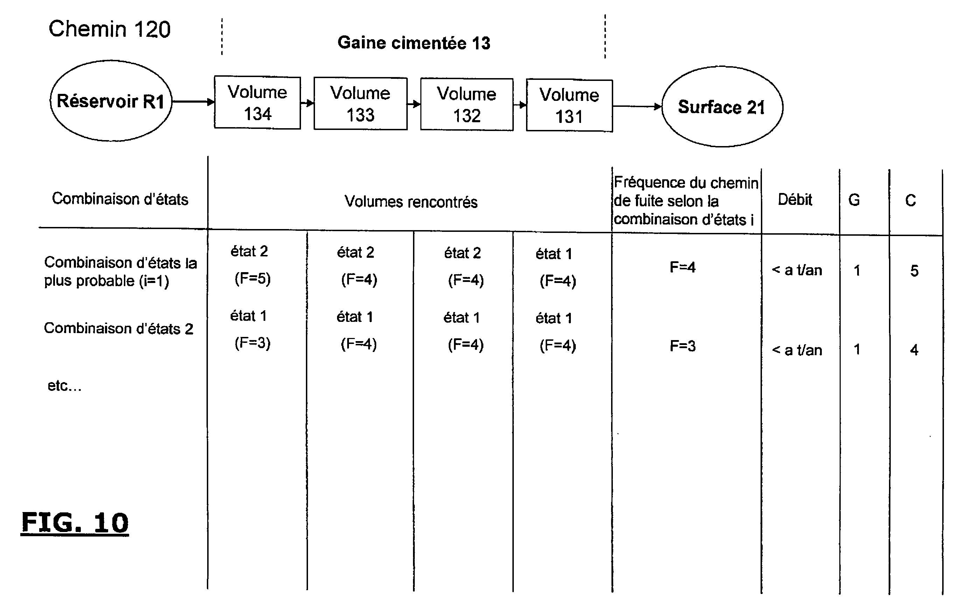

Reprenons le chemin de fuite 120 généré à l'étape 2. Une étude des composants impliqués dans le chemin 120, de leurs états considérés, des scénarios de défaillance et de leurs notations est donnée. Cette étude est illustrée par la figure 10.

Dans l'exemple représenté en figure 10, on indique d'abord le scénario le plus probable (ligne 1), c'est-à-dire le scénario mettant en jeu les états les plus probables des volumes rencontrés. Ensuite, on s'attache aux états moins probables. Les fréquences du chemin de fuite selon chacune des combinaisons d'états considérés sont calculées à partir des fréquences affectées aux volumes impliqués, éventuellement en introduisant les probabilités conditionnelles. Les débits associés sont calculés.

Dans cet exemple, la criticité du scénario s'obtient en faisant la somme de la note de fréquence et de la note de gravité. Dans notre exemple, on constate que le scénario le plus critique s'identifie au scénario le plus probable.

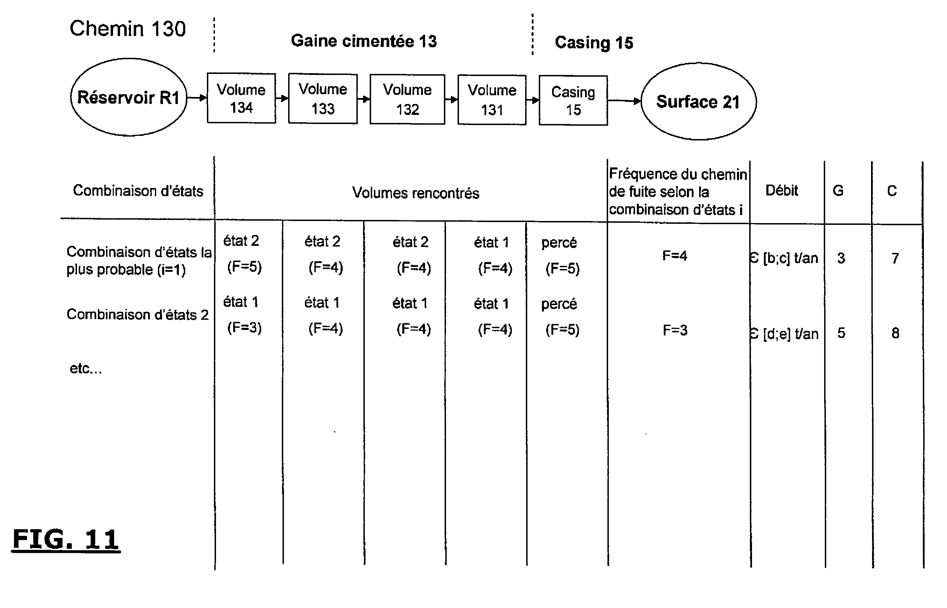

De la même manière que pour le chemin 120, une étude des volumes impliqués dans le chemin 130, de leurs états considérés, des scénarios de défaillance et de leurs notations est donnée. Cette étude est illustrée par la figure 11.

Pour ce chemin de fuite, on constate que le scénario le plus critique ne s'identifie pas au scénario le plus probable.

La notation des scénarios de fuite est effectuée pour les autres chemins de fuites identifiées pour le volume 134, puis pour les autres volumes.

### Etape 4 : HIÉRARCHISATION TEMPORELLE

### 4.1 : Cartographie des scénarios de défaillance

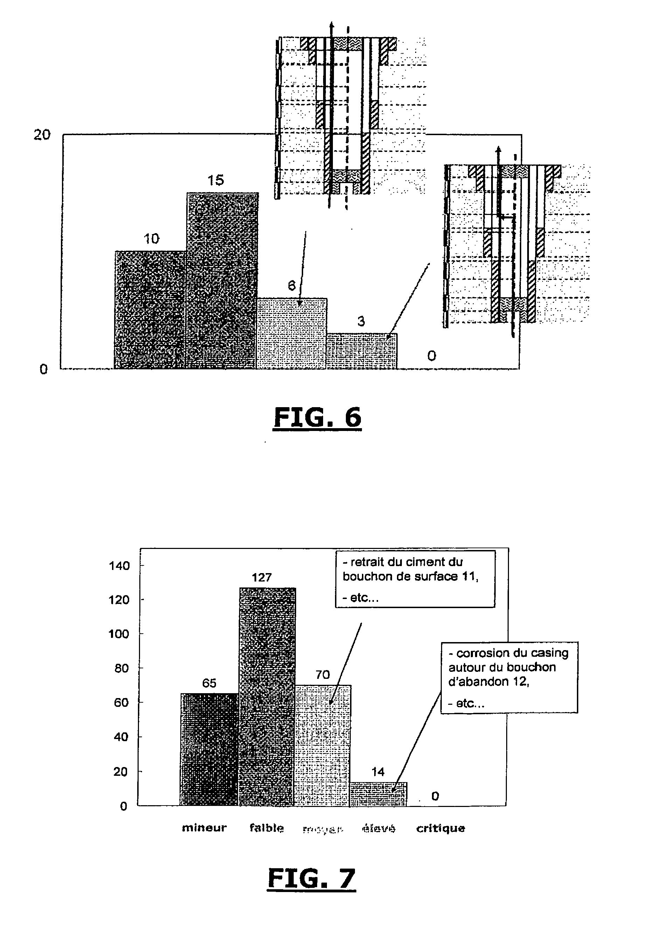

L'étape 3 a permis d'identifier les scénarios et de leur affecter une note de criticité, représentant leur indice de risque. On peut donc désormais hiérarchiser ces scénarios sur la base de leur criticité, et obtenir ainsi une cartographie globale des scénarios de défaillance de la fonction de stockage. La figure 6 illustre la cartographie obtenue dans cet exemple à une date donnée. On montre qu'ici un des scénarios les plus critiques, c'est-à-dire produisant le risque de débit de fuite le plus élevé, est le scénario consistant en la remontée du CO₂ jusqu'à la surface à travers le premier bouchon 12 puis le casing 14 percé (chemin de fuite 150, figure 5).

### 4.2 : Cartographie des volumes

On cherche ici à mettre en évidence les volumes à risque du système de stockage. L'invention permet de réaliser cette mise en évidence rétrospectivement, une fois les scénarios de défaillance identifiés et hiérarchisés au niveau global. Qualitativement, il apparaît clair que le volume le plus critique du système sera le volume le plus déterminant des volumes impliqués dans le scénario le plus critique.

Dans cette étude, les résultats peuvent être présentés comme sur la figure 7. La figure 7 présente une hiérarchisation à une date donnée des différents modes de défaillance des divers volumes en fonction de leur criticité : mineure, faible, moyenne, élevée, critique.

### Etape finale : solutions technologiques de sécurisation (rédaction des risques)

Dans cet exemple, les résultats de l'identification de risque de défaillance de la fonction de stockage de CO₂ dans un réservoir équipé d'un puits bouché, établis par le procédé selon l'invention, font ressortir les risques les plus critiques suivants :
- le risque associé à la corrosion des casings autour du bouchon d'abandon 12 et à la création possible consécutive d'un interstice micro annulaire (interface bouchon/casing) ;
- le risque lié au perçage par corrosion des casings des différentes colonnes et à des dispositions d'abandon insuffisantes (nombre de bouchons insuffisants).

Ces résultats peuvent par exemple justifier les recommandations de sécurisation suivantes :
- Reprise du puits pour réparation et mise en oeuvre de bouchons de ciment supplémentaires couvrant l'ensemble des colonnes de puits ;
- Approfondissement par des études spécifiques et des essais en laboratoire des connaissances sur le phénomène de corrosion au droit du bouchon profond 12 (cinétique de dégradation, devenir des oxydes, impact sur la perméabilité résultante à l'interface ciment/casing...).

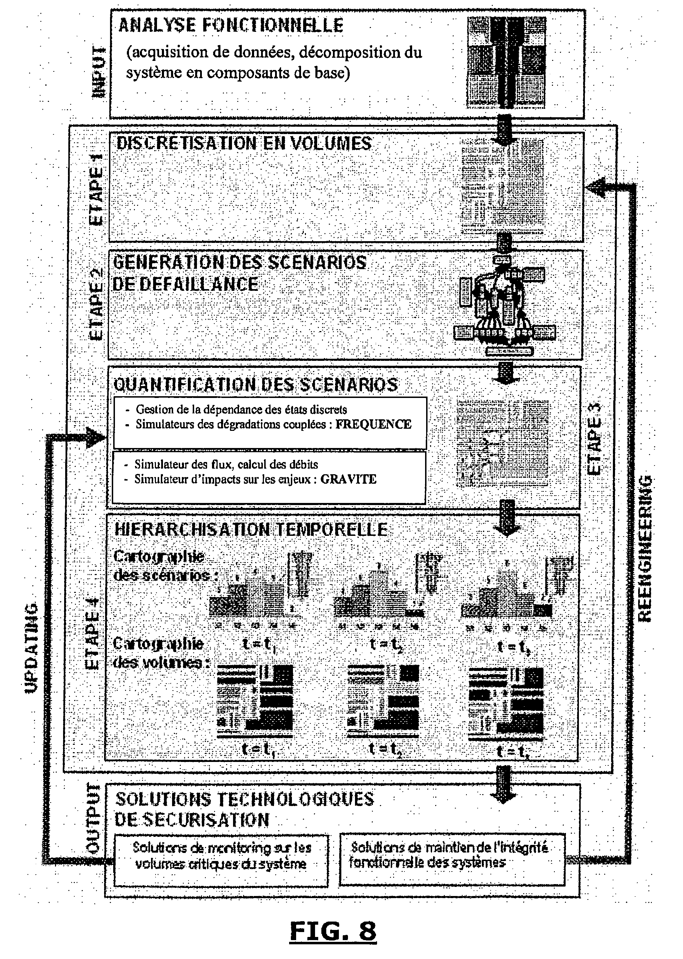

La figure 8 donne un récapitulatif des différentes opérations effectuées et leurs enchaînements lors d'un exemple d'évaluation des risques de défaillance d'un puits bouché, dans un environnement de stockage de CO₂, constituant une installation technique visant à garantir l'étanchéité du stockage.

L'invention n'est pas limitée à l'exemple qui vient d'être décrit et peut être appliquée à tout système de confinement géologique.

## Revendications

1. Procédé d'identification de risque de défaillance d'un système de confinement géologique (10), ledit procédé comprenant les étapes suivantes :
- acquisition de données relatives audit système (10);
- en fonction desdites données relatives audit système (10), décomposition dudit système en une pluralité de composants (11-17);
- modélisation d'au moins un composant (11-17) par au moins un volume (131-134), ladite modélisation étant réalisée par une discrétisation en volume dudit composant (11-17) ;
- génération d'au moins un scénario de défaillance dudit système, ladite génération comprenant au moins une itération des étapes suivantes :
- analyse d'un état d'au moins un volume (131-134) modélisant au moins un composant (11-17) dudit système;
- détection, en fonction de l'état du volume (11-17), d'au moins un mode de défaillance potentiel dudit volume (11-17) ;

2. Procédé selon la revendication 1, **caractérisé en ce qu'**il comprend en outre une étape de proposition d'au moins une solution de sécurisation permettant d'éviter un scénario de défaillance.

3. Procédé selon les revendications 1 ou 2, **caractérisé en ce qu'**il comprend en outre une étape de choix d'au moins un scénario de défaillance parmi une pluralité de scénarios de défaillance.

4. Procédé selon l'une quelconque des revendications précédentes, **caractérisé en ce qu'**il comprend en outre une étape d'identification d'au moins une source de risque de défaillance pour au moins un scénario de défaillance.

5. Procédé selon l'une quelconque des revendications précédentes, **caractérisé en ce qu'**il comprend en outre une sélection dans une base d'au moins un volume (131-134) prédéfini permettant de modéliser au moins un composant (11-17) du système de confinement (10).

6. Procédé selon l'une quelconque des revendications précédentes, **caractérisé en ce qu'**à au moins un volume(131-134) est associé un facteur dit de fréquence, ledit facteur de fréquence étant évalué au moins en fonction d'une probabilité de défaillance dudit volume (131-134).

7. Procédé selon l'une quelconque des revendications précédentes, **caractérisé en ce qu'**à au moins un scénario de défaillance est associé un facteur dit de fréquence, ledit facteur de fréquence étant évalué en fonction d'une probabilité d'occurrence dudit scénario.

8. Procédé selon l'une quelconque des revendications précédentes, **caractérisé en ce qu'**à au moins un scénario de défaillance est associé un facteur dit de gravité, ledit facteur de gravité étant évalué en fonction des conséquences dudit scénario.

9. Procédé selon la revendication 8, **caractérisé en ce que** l'évaluation du facteur de gravité comprend une prise en compte d'un débit de fuite d'un contenu dudit système de confinement (10) et/ou d'un taux d'intrusion dans ledit système de confinement (10).

10. Procédé selon la revendication 8 ou 9, **caractérisé en ce qu'**au moins un facteur de gravité est associé à au moins un enjeu prédéterminé.

11. Procédé selon l'une quelconque des revendications précédentes, **caractérisé en ce qu'**il comprend en outre une évaluation d'une criticité d'un scénario de défaillance en fonction d'un facteur de fréquence et/ou d'un facteur de gravité.

12. Procédé selon la revendication 11, **caractérisé en ce qu'**il comprend en outre une identification et/ou une hiérarchisation d'au moins un scénario de défaillance en fonction d'une criticité d'au moins un autre scénario défaillance.

13. Procédé selon l'une quelconque des revendications précédentes, **caractérisé en ce qu'**il comprend en outre une évaluation d'une criticité d'un mode de défaillance d'un volume, en fonction d'un facteur de fréquence et d'une contribution dudit volume à au moins un scénario le plus critique.

14. Procédé selon la revendication 13, **caractérisé en ce qu'**il comprend en outre une identification et/ou une hiérarchisation d'au moins un mode de défaillance d'au moins un volume (131-134) en fonction d'une criticité d'au moins un mode de défaillance d'au moins un autre volume (131-134).

15. Procédé selon l'une quelconque des revendications précédentes **caractérisé en ce que** l'analyse de l'état d'un volume (131-134) comprend une évaluation d'au moins une caractéristique physico-chimique du volume (131-134) dans des conditions prédéterminées.

16. Procédé selon l'une quelconque des revendications précédentes, **caractérisé en ce que** l'analyse de l'état d'un volume (131-134) comprend une prise en compte d'un état d'au moins un autre volume (131-134) parmi une pluralité de volumes (131-134).

17. Procédé selon l'une quelconque des revendications précédentes, **caractérisé en ce qu'**il comprend en outre une simulation permettant d'estimer quantitativement un scénario de défaillance.

18. Procédé selon l'une quelconque des revendications précédentes, **caractérisé en ce qu'**il comprend en outre une simulation permettant d'estimer quantitativement l'évolution d'un état d'un volume au cours du temps.

19. Procédé selon l'une quelconque des revendications précédentes, **caractérisé en ce que** l'analyse de l'état d'un volume (131-134) comprend une prise en compte d'une cinétique d'évolution dudit volume (131-134).

20. Procédé selon l'une quelconque des revendications précédentes, **caractérisé en ce que** les données relatives au système de confinement (10) comprennent des données relatives à une installation technique équipant le système de confinement (10).

21. Procédé selon l'une quelconque des revendications précédentes, **caractérisé en ce que** les données relatives au système de confinement (10) comprennent des données relatives à la biosphère et/ou à la géosphère dans et/ou autour dudit système (10).

22. Procédé selon l'une quelconque des revendications précédentes, **caractérisé en ce que** les données relatives au système de confinement (10) comprennent des données relatives au contenu dudit système (10).

23. Procédé selon l'une quelconque des revendications précédentes, **caractérisé en ce que** les données relatives au système de confinement (10) comprennent une représentation en deux dimensions ou trois dimensions dudit système (10) dans son environnement.

24. Procédé selon l'une quelconque des revendications précédentes, **caractérisé en ce que** les données relatives au système de confinement (10) comprennent des données de surveillance dudit système (10).

25. Procédé selon l'une quelconque des revendications précédentes, **caractérisé en ce qu'**au moins un volume (131-134) modélise au moins un composant (11-17) du système de confinement.

26. Procédé selon l'une quelconque des revendications précédentes, **caractérisé en ce qu'**un volume (131-134) modélise au moins un composant (11-17) faisant partie de la géosphère et/ou de la biosphère se trouvant dans ou à proximité du système de confinement (10).

27. Procédé selon l'une quelconque des revendications précédentes **caractérisé en ce qu'**un scénario de défaillance comprend une combinaison d'une pluralité de modes de défaillances d'une pluralité de volumes (131-134).

28. Procédé selon l'une quelconque des revendications précédentes, **caractérisé en ce qu'**il comprend, en outre, pour au moins un scénario, une évaluation d'une incertitude pour ledit scénario.

29. Procédé selon l'une quelconque des revendications précédentes, **caractérisé en ce que** l'identification d'un scénario de défaillance prend en compte des données relatives à au moins une condition environnementale.

30. Procédé selon l'une quelconque des revendications précédentes, **caractérisé en ce qu'**il comprend une identification et/ou une hiérarchisation d'au moins un scénario de défaillance du système de confinement géologique projeté à une date future prédéterminée.

31. Procédé selon l'une quelconque des revendications précédentes, **caractérisé en ce qu'**il est mis en oeuvre pour l'évaluation de risque de défaillance d'un système de confinement utilisé pour stocker du CO₂.

32. Procédé selon l'une quelconque des revendications précédentes, **caractérisé en ce qu'**il est mis en oeuvre pour l'analyse de l'abandon d'un champ pétrolier.

33. Système d'identification de risque de défaillance d'un système de confinement géologique (10), ledit système comprenant :
- des moyens d'acquisition de données relatives audit système (10);
- des moyens de décomposition dudit système en une pluralité de composants (11-17) en fonction desdites données relatives audit système (10) ;
- des moyens de modélisation d'au moins un composant (11-17) par au moins un volume (131-134), ladite modélisation étant réalisée par une discrétisation en volume dudit composant (11-17) ;
- des moyens de génération d'au moins un scénario de défaillance dudit système (10), ladite génération comprenant au moins une itération des étapes suivantes :
- analyse d'un état d'au moins un volume (131-134) modélisant au moins un composant (11-17) dudit système (10);
- détection, en fonction de l'état du volume, d'au moins un mode de défaillance potentiel dudit volume (131-134) ;

## Claims

1. A method for the identification of the risk of failure of a geological confinement system (10), said method comprising the following steps:
- acquisition of data relating to said system (10);
- as a function of said data relating to said system (10), breakdown of said system into a plurality of components (11-17);
- modelling of at least one component (11-17) by at least one volume (131-134), said modelling being carried out by a discretization into volumes of said component (11-17);
- generation of at least one failure scenario of said system, said generation comprising at least one iteration of the following steps:
- analysis of a state of at least one volume (131-134) modelling at least one component (11-17) of said system;
- detection, as a function of the state of the volume (11-17), of at least one potential failure mode of said volume (11-17);

2. The method according to claim 1, **characterized in that** it also comprises a step of proposing at least one solution for ensuring security making it possible to prevent a failure scenario.

3. The method according to claims 1 or 2, **characterized in that** it also comprises a step of choosing at least one failure scenario from a plurality of failure scenarios.

4. The method according to any one of the preceding claims, **characterized in that** it also comprises a step of identification of at least one source of risk of failure for at least one failure scenario.

5. The method according to any one of the preceding claims, **characterized in that** it also comprises a selection from a base of at least one predefined volume (131-134) making it possible to model at least one component (11-17) of the confinement system (10).

6. The method according to any one of the preceding claims, **characterized in that** at least one volume is associated with a so-called frequency factor (131-134), said frequency factor being evaluated at least as a function of a probability of failure of said volume (131-134).

7. The method according to any one of the preceding claims, **characterized in that** a so-called frequency factor is associated with at least one failure scenario, said frequency factor being evaluated as a function of a probability of the occurrence of said scenario.

8. The method according to any one of the preceding claims, **characterized in that** a so-called gravity factor is associated with at least one failure scenario, said gravity factor being evaluated as a function of the consequences of said scenario.

9. The method according to claim 8, **characterized in that** the evaluation of the gravity factor comprises taking into account a flow rate of leakage of a content from said confinement system (10) and/or a rate of intrusion into said confinement system (10).

10. The method according to claim 8 or 9, **characterized in that** at least one gravity factor is associated with at least one predetermined issue.

11. The method according to any one of the preceding claims, **characterized in that** it also comprises criticality evaluation of a failure scenario as a function of a frequency factor and/or a gravity factor.

12. The method according to claim 11, **characterized in that** it also comprises identification and/or prioritization of at least one failure scenario as a function of criticality of at least one other scenario failure.

13. The method according to any one of the preceding claims, **characterized in that** it also comprises criticality evaluation of a failure mode of a volume, as a function of a frequency factor and a contribution of said volume to at least one most critical scenario.

14. The method according to claim 13, **characterized in that** it also comprises identification and/or prioritization of at least one failure mode of at least one volume (131-134) as a function of a criticality of at least one failure mode of at least one other volume (131-134).

15. The method according to any one of the preceding claims, **characterized in that** the analysis of the state of a volume (131-134) comprises evaluation of at least one physico-chemical characteristic of the volume (131-134) under predetermined conditions.

16. The method according to any one of the preceding claims, **characterized in that** the analysis of the state of a volume (131-134) comprises taking into account a state of at least one other volume (131-134) among a plurality of volumes (131-134).

17. The method according to any one of the preceding claims, **characterized in that** it also comprises a simulation making it possible to quantitatively estimate a failure scenario.

18. The method according to any one of the preceding claims, **characterized in that** it also comprises a simulation making it possible to quantitatively estimate the evolution of a state of a volume over time.

19. The method according to any one of the preceding claims, **characterized in that** the analysis of the state of a volume (131-134) comprises taking into account the evolution kinetics of said volume (131-134).

20. The method according to any one of the preceding claims, **characterized in that** the data relating to the confinement system (10) comprise data relating to a technical installation equipping the confinement system (10).

21. The method according to any one of the preceding claims, **characterized in that** the data relating to the confinement system (10) comprise data relating to the biosphere and/or geosphere in and/or around said system (10).

22. The method according to any one of the preceding claims, **characterized in that** the data relating to the confinement system (10) comprise data relating to the contents of said system (10).

23. The method according to any one of the preceding claims, **characterized in that** the data relating to the confinement system (10) comprise a two-dimensional or three-dimensional representation of said system (10) in its environment.

24. The method according to any one of the preceding claims, **characterized in that** the data relating to the confinement system (10) comprise data of the monitoring of said system (10).

25. The method according to any one of the preceding claims, **characterized in that** at least one volume (131-134) models at least one component (11-17) of the confinement system.

26. The method according to any one of the preceding claims, **characterized in that** a volume (131-134) models at least one component (11-17) forming part of the geosphere and/or biosphere located within or in proximity to the confinement system (10).

27. The method according to any one of the preceding claims **characterized in that** a failure scenario comprises a combination of a plurality of failure modes of a plurality of volumes (131-134).

28. The method according to any one of the preceding claims, **characterized in that** it also comprises, for at least one scenario, an evaluation of an uncertainty for said scenario.

29. The method according to any one of the preceding claims, **characterized in that** the identification of a failure scenario takes into account the data relating to at least one environmental condition.

30. The method according to any one of the preceding claims, **characterized in that** it comprises identification and/or prioritization of at least one failure scenario of the geological confinement system projected to a predetermined future date.

31. The method according to any one of the preceding claims, **characterized in that** it is implemented for the evaluation of the risk of failure of a confinement system used to store CO₂.

32. The method according to any one of the preceding claims, **characterized in that** it is implemented for the analysis of the abandonment of an oil field.

33. A system of identification of the risk of failure of a geological confinement system (10), said system comprising:
- means for the acquisition of data relating to said system (10);
- means for the breakdown of said system into a plurality of components (11-17) as a function of said data relating to said system (10);
- means for modelling at least one component (11-17) by at least one volume (131-134), said modelling being carried out by a discretization into volumes of said component (11-17);
- means for the generation of at least one failure scenario of said system (10), said generation comprising at least one iteration of the following steps:
- analysis of a state of at least one volume (131-134) modelling at least one component (11-17) of said system (10);
- detection, as a function of the state of the volume, of at least one potential failure mode of said volume (131-134).

## Patentansprüche

1. Verfahren zur Erkennung von Risiken einer Leckage in einer geologischen Speicherstätte (10), wobei dieses Verfahren folgende Schritte umfasst:
- Gewinnung von Daten über diesen Speicher (10);
- diesen Daten über jenen Speicher (10) entsprechend, Zerlegung jenes Speichers in eine Vielzahl von Komponenten (11-17);
- Modellierung mindestens einer Komponente (11-17) anhand mindestens einer Masse (131-134), wobei diese Modellierung durch eine Diskretisierung jener Komponente (11-17) in Masse erfolgt;
- Erstellung mindestens eines Leckage-Szenarios in jenem Speicher, wobei diese Erstellung mindestens eine Iteration folgender Schritte umfasst:
- Analyse einer Beschaffenheit wenigstens einer mindestens eine Komponente (11-17) jenes Speichers modellierenden Masse (131-134);
- Detektion, der Beschaffenheit der Masse (11-17) entsprechend, mindestens einer potentiellen Leckageart dieser Masse (11-17);

2. Verfahren nach Anspruch 1, **dadurch gekennzeichnet, dass** es außerdem einen Schritt für den Vorschlag von mindestens einer Sicherungslösung umfasst, um ein Leckagerisiko ausschließen zu können.

3. Verfahren nach Anspruch 1 oder 2, **dadurch gekennzeichnet, dass** es außerdem einen Schritt für die Auswahl mindestens eines Leckage-Szenarios aus einer Vielzahl von Leckage-Szenarien umfasst.

4. Verfahren nach einem der vorhergehenden Ansprüche, **dadurch gekennzeichnet, dass** es außerdem einen Schritt für die Identifizierung mindestens einer Quelle eines Leckagerisikos für mindestens ein Leckage-Szenario umfasst.

5. Verfahren nach einem der vorhergehenden Ansprüche, **dadurch gekennzeichnet, dass** es außerdem eine Auswahl aus einer Auswahlgrundlage mindestens einer vorbestimmten, die Modellierung mindestens einer Komponente (11-17) der Speicherstätte (10) ermöglichenden Masse (131-134) umfasst.

6. Verfahren nach einem der vorhergehenden Ansprüche, **dadurch gekennzeichnet, dass** mit wenigstens einer Masse (131-134) ein so genannter Häufigkeitsfaktor verbunden wird, wobei jener Häufigkeitsfaktor mindestens nach einer Leckagewahrscheinlichkeit jener Masse (131-134) eingeschätzt wird.

7. Verfahren nach einem der vorhergehenden Ansprüche, **dadurch gekennzeichnet, dass** mit wenigstens einem Leckage-Szenario ein so genannter Häufigkeitsfaktor verbunden wird, wobei jener Häufigkeitsfaktor nach einer Wahrscheinlichkeit des Eintretens jenes Szenarios eingeschätzt wird.

8. Verfahren nach einem der vorhergehenden Ansprüche, **dadurch gekennzeichnet, dass** mit wenigstens einem Leckage-Szenario ein so genannter Schwerefaktor verbunden wird, wobei jener Schwerefaktor nach den Auswirkungen jenes Szenarios eingeschätzt wird.

9. Verfahren nach Anspruch 8, **dadurch gekennzeichnet, dass** die Einschätzung des Schwerefaktors eine Berücksichtigung einer Leckagemenge eines Inhalts aus jener Speicherstätte (10) und/oder einer Intrusionsmenge in jene Speicherstätte (10) umfasst.

10. Verfahren nach Anspruch 8 oder 9, **dadurch gekennzeichnet, dass** mindestens ein Schwerefaktor mit mindestens einem vorbestimmten Ziel verbunden wird.

11. Verfahren nach einem der vorhergehenden Ansprüche, **dadurch gekennzeichnet, dass** es außerdem eine Abschätzung einer Kritikalität eines Leckage-Szenarios nach einem Häufigkeits- und/oder einem Schwerefaktor umfasst.

12. Verfahren nach Anspruch 11, **dadurch gekennzeichnet, dass** es außerdem eine Identifizierung und/oder eine Hierarchiesierung mindestens eines Leckage-Szenarios nach einer Kritikalität mindestens eines weiteren Leckage-Szenarios umfasst.

13. Verfahren nach einem der vorhergehenden Ansprüche, **dadurch gekennzeichnet, dass** es außerdem eine Abschätzung einer Kritikalität einer Leckageart einer Masse, einem Häufigkeitsfaktor und einem Beitrag jener Masse zu mindestens einem kritischsten Szenario entsprechend, umfasst.

14. Verfahren nach Anspruch 13, **dadurch gekennzeichnet, dass** es außerdem eine Identifizierung und/oder eine Hierarchiesierung mindestens einer Leckageart mindestens einer Masse (131-134), einer Kritikalität mindestens einer Leckageart mindestens einer weiteren Masse (131-134) entsprechend, umfasst.

15. Verfahren nach einem der vorhergehenden Ansprüche, **dadurch gekennzeichnet, dass** die Analyse der Beschaffenheit einer Masse (131-134) eine Bewertung mindestens einer physikalisch-chemischen Charakterisierung der Masse (131-134) unter vorbestimmten Bedingungen umfasst.

16. Verfahren nach einem der vorhergehenden Ansprüche, **dadurch gekennzeichnet, dass** die Analyse der Beschaffenheit einer Masse (131-134) eine Berücksichtigung einer Beschaffenheit mindestens einer weiteren Masse (131-134) unter einer Vielzahl von Massen (131-134) umfasst.

17. Verfahren nach einem der vorhergehenden Ansprüche, **dadurch gekennzeichnet, dass** es außerdem eine Simulation zur quantitativen Abschätzung eines Leckage-Szenarios umfasst.

18. Verfahren nach einem der vorhergehenden Ansprüche, **dadurch gekennzeichnet, dass** es außerdem eine Simulation umfasst, um die zeitliche, beschaffenheitsmäßige Entwicklung einer Masse quantitativ abzuschätzen.

19. Verfahren nach einem der vorhergehenden Ansprüche, **dadurch gekennzeichnet, dass** die Analyse einer Masse (131-134) in ihrer Beschaffenheit eine Berücksichtigung einer Entwicklungskinetik jener Masse (131-134) umfasst.

20. Verfahren nach einem der vorhergehenden Ansprüche, **dadurch gekennzeichnet, dass** die Daten über die Speicherstätte (10) Daten über eine technische, dem Speichersystem (10) ausstattende Anlage umfassen.

21. Verfahren nach einem der vorhergehenden Ansprüche, **dadurch gekennzeichnet, dass** die Daten über die Speicherstätte (10) Daten über die Biosphäre und/oder die Geosphäre in jenem und/oder um jenen Speicher (10) umfassen.

22. Verfahren nach einem der vorhergehenden Ansprüche, **dadurch gekennzeichnet, dass** die Daten über die Speicherstätte (10) Daten über den Inhalt jenes Speichers (10) umfassen.

23. Verfahren nach einem der vorhergehenden Ansprüche, **dadurch gekennzeichnet, dass** die Daten über die Speicherstätte (10) eine zweidimensionale oder dreidimensionale Darstellung jenes Speichers (10) in seiner Umgebung umfassen.

24. Verfahren nach einem der vorhergehenden Ansprüche, **dadurch gekennzeichnet, dass** die Daten über die Speicherstätte (10) Überwachungsdaten zu jenem Speicher (10) umfassen.

25. Verfahren nach einem der vorhergehenden Ansprüche, **dadurch gekennzeichnet, dass** mindestens eine Masse (131-134) mindestens eine Komponente (11-17) der Speicherstätte modelliert.

26. Verfahren nach einem der vorhergehenden Ansprüche, **dadurch gekennzeichnet, dass** eine Masse (131-134) mindestens eine Komponente (11-17) modelliert, die zu der Geosphäre und/oder zu der Biosphäre in bzw. nahe der Speicherstätte (10) gehört.

27. Verfahren nach einem der vorhergehenden Ansprüche, **dadurch gekennzeichnet, dass** ein Leckage-Szenario eine Kombination einer Vielzahl von Leckagearten einer Vielzahl von Massen (131-134) umfasst.

28. Verfahren nach einem der vorhergehenden Ansprüche, **dadurch gekennzeichnet, dass** es außerdem für mindestens ein Szenario eine Abschätzung einer Unsicherheit für jenes Szenario umfasst.

29. Verfahren nach einem der vorhergehenden Ansprüche, **dadurch gekennzeichnet, dass** die Identifizierung eines Leckage-Szenarios Daten über mindestens einen umweltbezogenen Zustand berücksichtigt.

30. Verfahren nach einem der vorhergehenden Ansprüche, **dadurch gekennzeichnet, dass** es eine Identifizierung und/oder eine Hierarchiesierung mindestens eines Leckage-Szenarios der geologischen Ablagerungsstätte umfasst, das auf einen vorbestimmten, in der Zukunft liegenden Termin projiziert wird.

31. Verfahren nach einem der vorhergehenden Ansprüche, **dadurch gekennzeichnet, dass** es umgesetzt wird, um das Leckagerisiko in einer zur Einlagerung von CO₂ eingesetzten Speicherstätte abzuschätzen.

32. Verfahren nach einem der vorhergehenden Ansprüche, **dadurch gekennzeichnet, dass** es zur Analyse der Stilllegung eines Erdölfelds umgesetzt wird.

33. System zur Erkennung von Risiken einer Leckage in einer geologischen Speicherstätte (10), wobei jenes Verfahren wie folgt umfasst:
- Vorrichtungen für die Gewinnung von Daten über diesen Speicher (10);
- Vorrichtungen für die Zerlegung dieses Speichers in eine Vielzahl von Komponenten (11-17) nach jenen Daten über jenen Speicher (10);
- Vorrichtungen für die Modellierung mindestens einer Komponente (11-17) anhand mindestens einer Masse (131-134), wobei jene Modellierung durch eine Diskretisierung dieser Komponente (11-17) in Masse erfolgt;
- Vorrichtungen für die Erstellung mindestens eines Leckage-Szenarios in jenem Speicher (10), wobei diese Erstellung mindestens eine Iteration folgender Schritte umfasst:
- Analyse einer Beschaffenheit wenigstens einer mindestens eine Komponente (11-17) jenes Speichers (10) modellierenden Masse (131-134);
- Detektion, der Beschaffenheit der Masse entsprechend, mindestens einer potentiellen Leckageart jener Masse (131-134);
